# EUROPÄISCHE PATENTSCHRIFT

(11) **EP 1 707 750 B1**
(45) Veröffentlichungstag und Bekanntmachung des Hinweises auf die Patenterteilung: **02.03.2011**
(21) Anmeldenummer: 05006401.3
(22) Anmeldetag: 23.03.2005
(51) Int. Cl.: F01D 9/06, F01D 25/26, F16L 5/02, F16L 51/03

(54) **Rohrdurchführung und Verfahren zum Durchführen eines Mediums durch eine Trennwand**
Pipe throughpass and method of passing a medium through a separation wall
Passage pour tuyau et méthode pour faire passer un milieu à travers une paroi de séparation

(43) Veröffentlichungstag der Anmeldung: 04.10.2006
(73) Patentinhaber: SIEMENS AKTIENGESELLSCHAFT, 80333 München (DE)
(72) Erfinder: Hartstein, Wilhelm, 45470 Mülheim an der Ruhr (DE); Traugott, Paul, 46282 Dorsten (DE); Thiemann, Thomas, Dr., 45659 Recklinghausen (DE); Wiesenberger, Max, 40547 Düsseldorf (DE)

(56) Entgegenhaltungen:
- DE-A1- 10 222 559
- DE-B- 1 272 934
- GB-A- 579 161
- US-A- 3 488 949
- US-A- 5 779 435

## Beschreibung

Die Erfindung betrifft eine Rohrdurchführung durch eine einen Hochdruckbereich von einem Niederdruckbereich trennende Trennwand, mit einer Rohrleitungsanordnung und einer die Rohrleitungsanordnung mindestens im Hochdruckbereich umschließenden und den Niederdruckbereich gegen den Hochdruckbereich abdichtenden Kompensatoranordnung. Die Erfindung führt auf eine Turbine mit einer Rohrdurchführung. Die Erfindung betrifft auch ein Verfahren zur Durchführung eines Mediums durch eine einen Hochdruckbereich von einem Niederdruckbereich trennende Trennwand mit einer Rohrleitungsanordnung, wobei der Niederdruckbereich gegen den Hochdruckbereich durch eine die Rohrleitungsanordnung mindestens im Hochdruckbereich umschließende Kompensatoranordnung abgedichtet wird.

Bei Rohrdurchführungen der eingangs genannten Art besteht oftmals das Problem, dass aufgrund einer zwischen einem Bereich höheren Druckes, der als Hochdruckbereich bezeichnet ist, und einem Bereich mit vergleichsweise niedrigerem Druck, der als Niederdruckbereich bezeichnet ist, eine Druckdifferenz besteht und erhebliche Kräfte auf die Rohrleitungsanordnung wirken, die zudem durch die Rohrleitungsanordnung auf nachfolgende Komponenten eingeleitet werden können. Daraus ergibt sich je nach Querschnitt der Rohrleitungsanordnung eine auf die nachfolgenden Komponenten wirkende zusätzliche Kraft, die entweder zu einer mechanischen Verformung oder Positionsänderung der nachfolgenden Komponenten führen kann oder aber eine stabilere und damit aufwändigere Konstruktion der nachfolgenden Komponenten erforderlich machen kann.

Besonders problematisch erweist sich die erläuterte Situation bei Rohrdurchführungen durch ein Außengehäuse einer Turbine, da die genannte Druckdifferenz zu einer erheblichen Krafteinleitung auf das Innengehäuse der Turbine führen kann. Je nach Querschnittsfläche im Einströmbereich der Rohrleitungsanordnung kann deshalb eine zusätzliche Kraft von bis zu 30 Tonnen und mehr auf das Innengehäuse wirken und schlimmstenfalls zu einer erhöhten Durchbiegung des Innengehäuses führen.

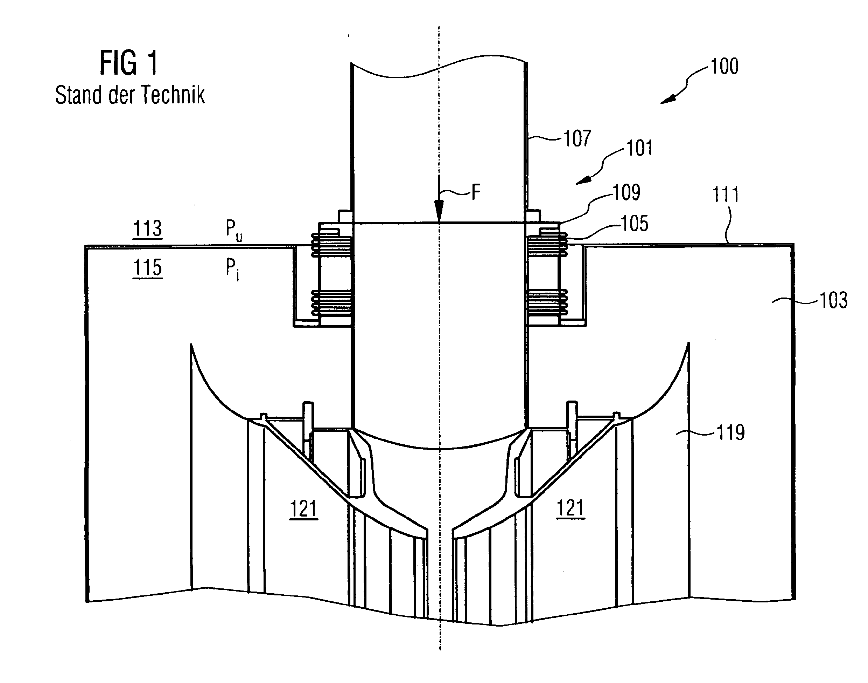

Bei einer Turbine gemäß dem Stand der Technik ist eine übliche Rohrdurchführung und ein übliches Verfahren in Bezug auf FIG 1 im Rahmen der Detailbeschreibung erläutert.

Bei derartigen Rohrdurchführungen ist eine die Rohrleitungsanordnung mindestens im Hochdruckbereich umschließende und den Niederdruckbereich gegen den Hochdruckbereich abdichtende Kompensatoranordnung vorgesehen, die für die Kompensation der bei einem Dehnungsausgleich der Rohrleitung auftretenden äußeren Kraft zuständig ist. Eine Kompensatoranordnung ist in der Regel direkt mit dem Außengehäuse und der Rohrleitung verbunden.

Die GB 579,161 beschreibt eine elastische Fluidturbine, die verschiedene Rohrdurchführungen aufweist. Unter anderem ist eine Rohrdurchführung beschrieben, die mindestens einen Hochdruckbereich und den Niederdruckbereich gegeneinander abdichtet.

Die US 5,779,435 offenbart eine Niederdruck-Dampfturbine, hauptsächlich bestehend aus einem Innengehäuse und einem Turbinenrotor.

Eine solche als Dehnungsausgleichselement wirkende Kompensatoranordnung wird beispielsweise für den Anschluss einer Rohrleitung im Bereich einer Überströmleitung, einer Einströmleitung oder einer Anzapfleitung oder im Bereich eines Innengehäuses bei Turbinen eingesetzt. Da die genannte Kraft und die ggf. daraus resultierende Durchbiegung vor allem aufgrund eines sich im Kompensator fortsetzenden Niederdruckbereichs entsteht, tritt die Krafteinleitung nur während des Betriebes auf und kann nicht, im Unterschied zu einer Durchbiegung in Folge von Eigengewicht, einmalig bei der Montage durch Verlagerung oder konstruktive Verstärkung der nachfolgenden Komponenten, insbesondere des Innengehäuses, ausgeglichen werden. Daher sind entsprechend große Radialspiele in Dichtungen, Deckbändern oder einer Beschaufelung vorzusehen, was zu einer signifikanten Minderung der Turbinenleistung durch Spaltleckage führen kann und zudem die Turbinenkosten erhöht.

Wünschenswert wäre es, die Krafteinleitung auf nachfolgende Komponenten zu vermeiden.

An dieser Stelle setzt die Erfindung an, deren Aufgabe es ist, eine Vorrichtung und ein Verfahren anzugeben, bei dem eine oben genannte Krafteinleitung weitestgehend vermieden ist.

Betreffend die Vorrichtung wird die Aufgabe gelöst durch eine Rohrdurchführung gemäß Anspruch 1.

Die Erfindung geht von der Überlegung aus, dass es zur Vermeidung einer oben genannten Krafteinleitung besonders vorteilhaft ist, eine ggf. auftretende Kraft als solche zu minimieren. Dabei hat die Erfindung erkannt, dass es gerade für den Fall betriebsabhängig auftretender Kräfte vorteilhaft ist, eine Rohrdurchführung derart auszubilden, dass auftretende Kräfte grundsätzlich als Spiegelkräfte, d. h. als gegeneinander gerichtete Kräfte, auftreten und sich auf diese Weise gegeneinander aufheben. Dabei hat die Erfindung auch erkannt, dass ein Hauptangriffspunkt einer Kraft der Eintrittsanschluss einer Rohrleitungsanordnung an die Kompensatoranordnung ist. Davon ausgehend sieht die Erfindung deshalb vor, einen ersten und einen zweiten sich gegenüber liegenden Eintrittsanschluss bei der Rohrdurchführung vorzusehen.

Die Rohrleitungsanordnung weist ein erstens Rohrstück am ersten Eintrittsanschluss und ein zweites Rohrstück am zweiten Eintrittsanschluss auf, wobei das erste und zweite Rohrstück entlang einer gemeinsamen Achse sich gegenüberliegend angeordnet sind.

Die Achse verläuft hierbei parallel zur Trennwand. Dadurch werden also Spiegelkräfte parallel zur Trennwand erzeugt. Dies hat den wesentlichen Vorteil, dass ein quer zur Trennwand verlaufendes Durchführungsrohrstück erst gar keiner betriebsabhängigen Kraft ausgesetzt ist.

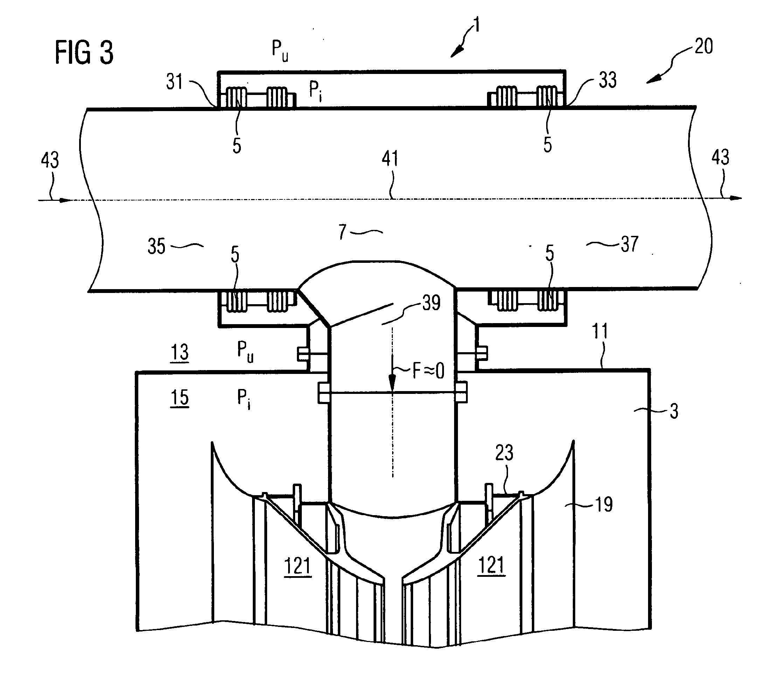

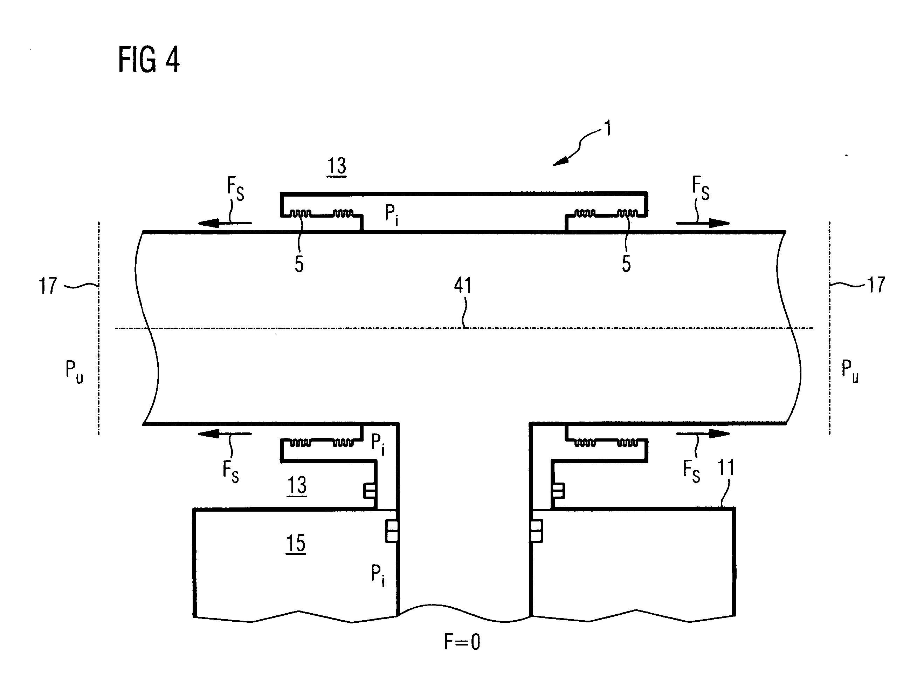

Die Rohrleitungsanordnung ist in Form eines T-Stücks mit zwei Schenkeln und einem Stamm gebildet, wobei das erste Rohrstück und das zweite Rohrstück jeweils einen Schenkel bilden und ein Durchführungsrohrsjtück den Stamm bildet. Bei dieser in Bezug auf die FIG 3 und 4 im Rahmen der Detailbeschreibung näher beschriebenen Ausführung der Erfindung findet also ein Kraftausgleich von betriebsabhängig auftretenden Spiegelkräften in den zwei Schenkeln des T-Stücks statt. Ein den Stamm des T-Stücks bildendes Durchführungsrohrstück ist praktisch zu keinem Zeitpunkt durch die zwischen Hochdruckbereich und Niederdruckbereich bestehende Druckdifferenz kraftbelastet. Damit ist eine Krafteinleitung auf eine an das Durchführungsrohrstück angeschlossene weitere Komponente grundsätzlich ausgeschlossen.

Dies hat den Vorteil, dass eine betriebsabhängige Krafteinleitung aufgrund des Druckunterschieds zwischen einem Hochdruckbereich und einem Niederdruckbereich weitestgehend wegfällt, da sich auftretende Kräfte im Wesentlichen aufheben. Aufgrund des Wegfalls der betriebsabhängigen Krafteinleitung kann eine oder können mehrere nachfolgende Komponenten, insbesondere ein Innengehäuse einer Turbine, weniger steif ausgeführt werden. Bei einer Rohrdurchführung einer Turbine, insbesondere einer Überströmleitung, einer Einströmleitung oder einer Anzapfleitung oder einer Rohrdurchführung zu einem Innengehäuse, kann ein Radialspiel einer Beschaufelung einer Turbine im Vergleich zu bestehenden Ausführungen reduziert werden.

Betreffend das Verfahren wird die Aufgabe mit einem Verfahren gemäß Anspruch 9 gelöst.

Das Verfahren verwirklicht das Konzept, wie es im Rahmen der oben genannten Rohrdurchführung erläutert wurde und weist die im Zusammenhang damit genannten Vorteile gegenüber üblichen Verfahren auf.

Vorteilhafte Weiterbildungen der Erfindung sind den Unteransprüchen zu entnehmen und geben vorteilhafte Möglichkeiten an, das genannte Konzept im Einzelnen zu realisieren.

Wie oben erläutert weist die Rohrleitungsanordnung ein erstes Rohrstück am ersten Eintrittsanschluss und ein zweites Rohrstück am zweiten Eintrittsanschluss auf, wobei das erste und das zweite Rohrstück entlang einer gemeinsamen Achse sich gegenüberliegend angeordnet sind. Diese Anordnung führt zu einer besonders zuverlässigen Erzeugung von Spiegelkräften, die sich in betriebsabhängig auftretenden Größen besonders zuverlässig gegeneinander aufheben, so dass eine im Betrieb auftretende Kraft auf ein Durchführungsrohrstück praktisch vernachlässigbar ist.

Die Rohrleitungsanordnung ist vorteilhaft mindestens im Hochdruckbereich von der Kompensatoranordnung dicht umschlossen.

Dadurch ist der Niederdruckbereich besonders zuverlässig gegen den Hochdruckbereich abgedichtet. Die Kompensatoranordnung kann zum Niederdruckbereich hin druckangepasst sein, so dass sich der Niederdruckbereich praktisch in einen Bereich zwischen der Rohrleitungsanordnung und der Kompensatoranordnung erstreckt. D. h., insbesondere der Zwischenraum zwischen Kompensatoranordnung und Rohrleitungsanordnung liegt auf Niederdruckniveau. In diesem Fall greift die Druckdifferenz insbesondere an einen durch den Kompensatorquerschnitt gebildeten Flächenquerschnitt an.

Das oben genannte Konzept erweist sich als besonders vorteilhaft für den Fall, dass die Trennwand in Form einer äußeren Trennwand gebildet ist und die Rohrleitungsanordnung in einen Betriebsdruckbereich mündet, der durch eine innere Trennwand vom Niederdruckbereich getrennt ist. Für diesen Fall würde nämlich bei üblichen Anordnungen nachteiligerweise eine betriebsabhängige durch den Differenzdruck an der äußeren Trennwand bestehende Krafteinleitung auf die den Betriebsdruckbereich haltende Betriebskomponente einseitig übertragen. Aufwändige Maßnahmen zur Aufnahme einer solchen einseitigen Krafteinleitung bei der betriebsdruckhaltenden, die innere Trennwand aufweisende Betriebskomponente sind gemäß dem neuen Konzept vermieden. Wie oben erläutert wird nämlich eine durch den Differenzdruck entstehende Kraft, wenn überhaupt, in Form von zwei Spiegelkräften gebildet, die sich gegenseitig aufheben. Dies führt dazu, dass an einem in einen Betriebsdruckbereich mündenden Durchführungsrohrstück grundsätzlich erst gar keine betriebsabhängige Kraft angreift oder jedenfalls eine einseitige Krafteinleitung weitestgehend vermieden ist.

Als besonders vorteilhaft erweist sich das erläuterte Konzept beispielsweise im Rahmen einer Rohrleitungsanordnung in Form einer Dampfzuführung, also beispielsweise einer Überstromleitung, einer Einströmleitung, einer Anzapfleitung oder einer Zuführung für ein Innengehäuse für eine Turbine.

Gemäß einer aus dem Stand der Technik bekannten Variante einer Rohrdurchführung verläuft die Achse quer zur Trennwand. Zwar wird bei dieser Variante ggf. über ein Durchführungsrohrstück eine betriebsabhängig auftretende Kraft auf eine an das Durchführungsrohrstück angeschlossene weitere Komponente eingeleitet. Da jedoch ein erstes und ein zweites sich gegenüberliegendes Durchführungsrohrstück vorgesehen ist, wird eine dazwischen liegende, an die Durchführungsrohrstücke angeschlossene Komponente beidseitig durch Spiegelkräfte belastet, so dass die Komponente insgesamt frei von betriebsabhängigen Kräften ist. Damit ist vor allem eine einseitige Kraftbelastung einer an ein Durchführungsrohrstück angeschlossenen Komponente ausgeschlossen, so dass eine Verschiebung oder eine Drift der Komponente wirksam vermieden ist. Darüber hinaus kann die Komponente in Bezug auf auftretende Spiegelkräfte ausreichend stabil ausgeführt werden.

Betreffend die Vorrichtung führt die Erfindung auch auf eine Turbine mit einem Innengehäuse und einem Außengehäuse sowie einer Rohrdurchführung der oben genannten Art, wobei erfindungsgemäß die äußere Trennwand einen Teil des Außengehäuses bildet. Die Rohrdurchführung ist also zur Durchführung einer Rohrleitungsanordnung durch das Außengehäuse vorgesehen.

Insbesondere bildet die innere Trennwand einen Teil des Innengehäuses. D. h., die Rohrleitungsanordnung ist an das Innengehäuse angeschlossen. Das Innengehäuse hält üblicherweise den Betriebsdruck, dem das Innere der Rohrleitungsanordnung ausgesetzt ist.

Insbesondere ist die Turbine in Form einer Niederdruckturbine gebildet. Es hat sich gezeigt, dass das oben erläuterte Konzept sowohl im Rahmen von für Neuanlagen eingesetzten Niederdruckteilturbinen als auch bei der Ertüchtigung bestehender Anlagen besonders effektiv wirkt. Bei solchen und anderen Turbinen ist die Kompensatoranordnung insbesondere um eine Einströmleitungsanordnung herum angeordnet und direkt mit dem Außengehäuse der Turbine verbunden.

Ausführungsbeispiele der Erfindung werden nachfolgend anhand der Zeichnung im Vergleich zum Stand der Technik, welcher zum Teil ebenfalls dargestellt ist, beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in:
- FIG 1: eine Schnittdarstellung einer zweiflutigen Nieder- druckturbine mit einer Rohrdurchführung gemäß dem Stand der Technik;
- FIG 2: eine schematische Darstellung der Rohrdurchführung gemäß dem Stand der Technik in FIG 1;
- FIG 3: eine Schnittdarstellung einer Niederdruckturbine gemäß der Erfindung, bei der eine Rohr- leitungsanordnung in Form eines T-Stücks gebildet ist;
- FIG 4: eine schematische Darstellung der T-förmigen Rohr- durchführung von FIG 3;
- FIG 5: eine Schnittdarstellung einer aus dem Stand der Technik bekannten Ausführungsform einer Niederdruckturbine, bei der eine Rohr- leitungsanordnung in Form zweier Schenkel gebildet ist;
- FIG 6: eine schematische Darstellung der zweischenkligen Rohrdurchführung von FIG 5;
- FIG 7: Darstellung verschiedener Positionen der Eintritts- anschlüsse.

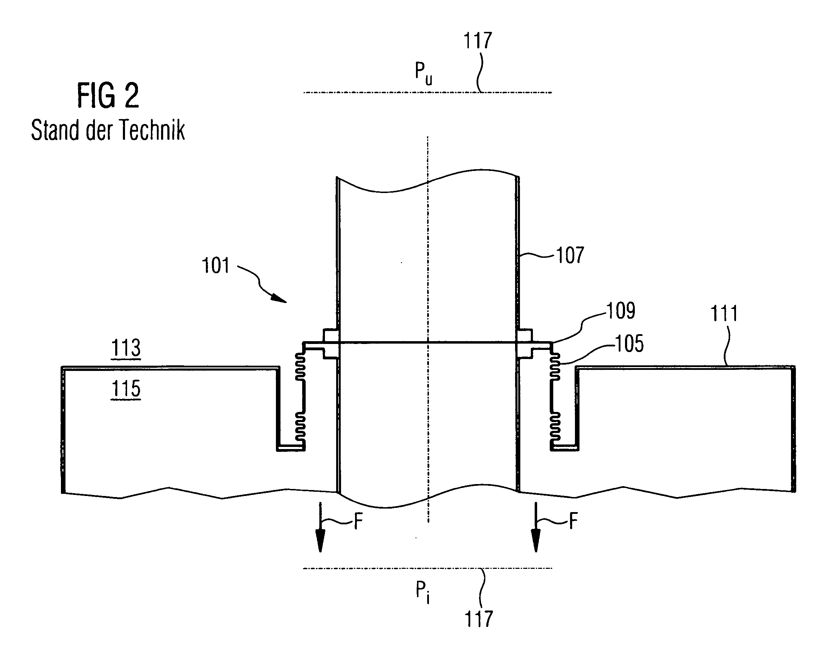

FIG 1 zeigt im Schnitt eine Niederdruckteilturbine 100 mit einer Rohrdurchführung 101, die ebenfalls im Schema zu FIG 1 in FIG 2 gezeigt ist. Die Niederdruckteilturbine weist ein Außengehäuse 103 auf, an dem die Rohrdurchführung 101 mit einer Kompensatoranordnung 105 befestigt ist. Die Kompensatoranordnung 105 ist an einer Einströmleitung 107 der Rohrdurchführung 101 befestigt. Dafür sind entsprechende Befestigungsmittel 109 in Form von Flanschen vorgesehen. Die Kompensatoranordnung 105 ist dabei an einer Trennwand 111 angebracht, die Teil des Außengehäuses 103 der Niederdruckturbine 100 ist. Die Trennwand 111 trennt dabei einen durch den Umgebungsdruck Pᵤ (z. B. 1 bar) gekennzeichneten Hochdruckbereich von einem durch einen Innendruck Pᵢ (z. B. 0,05 bar) gekennzeichneten Niederdruckbereich. Insbesondere liegt auch der zwischen Kompensatoranordnung 105 und Rohrleitungsanordnung 107 liegende Zwischenraum auf Niederdruckniveau des Druckes Pᵢ. Vorliegend ist der Hochdruckbereich mit dem Bezugszeichen 113 und der Niederdruckbereich mit dem Bezugszeichen 115 gekennzeichnet. Ganz allgemein zeichnet sich ein Hochdruckbereich gegenüber dem Niederdruckbereich dadurch aus, dass der entsprechende Druck Pᵤ größer als der entsprechende Druck Pᵢ ist. Die als Dehnungsausgleichselement wirkende Kompensatoranordnung 105 ist einerseits direkt mit dem Außengehäuse 103 an der Trennwand 111 verbunden und garantiert andererseits eine ausreichende Beweglichkeit der Rohrleitungsanordnung 107 relativ zum Außengehäuse 103. Aufgrund der Druckdifferenz Pᵤ - Pi = ΔP zwischen Hochdruckbereich 113 und Niederdruckbereich 115 kommt es zu einer Krafteinwirkung in Höhe der Kraft F (z. B. 30 t) auf die Rohrleitungsanordnung 107, die um so größer ist, je größer der Angriffsquerschnitt ist, der vorliegend durch den Querschnitt der Kompensatoranordnung 105 gebildet ist. Ein solcher Querschnitt ist schematisch mit dem Bezugszeichen 117 in FIG 2 dargestellt. Im Falle der in FIG 1 dargestellten Niederdruckteilturbine gemäß dem Stand der Technik kann diese Situation zu einer Krafteinleitung auch in Höhe von mehr als 30 t auf das Innengehäuse 119 der Niederdruckturbine 100 führen. Dies kann nachteiligerweise nicht nur zu einer Verlagerung des Innengehäuses 119 führen, sondern darüber hinaus auch zu einer fortschreitenden Verbiegung des Innengehäuses 119 führen. Beides beeinflusst nachteiligerweise die Möglichkeit einer Reduzierung von Radialspielen in den Dichtungen der Beschaufelung 121 der Niederdruckteilturbine 100. Dies kann zu einer signifikanten Minderung der Turbinenleistung durch eine Spaltleckage führen. Darüber hinaus muss das Innengehäuse 119 auf die Einwirkung einer Kraft in Höhe der Kraft F entsprechend steif ausgeführt werden, was die Turbinenkosten erhöht.

FIG 3 zeigt eine Niederdruckteilturbine 20 gemäß der Erfindung.

Die Niederdruckteilturbine 20 weist ein Außengehäuse 3 und ein Innengehäuse 19 auf. Eine Rohrdurchführung 1 ist mit ihrer Rohrleitungsanordnung 7 an einer einen Hochdruckbereich 13 von einem Niederdruckbereich 15 trennenden Trennwand 11 angebracht, wobei die Trennwand 11 Teil des Außengehäuses 3 ist. Die Rohrleitungsanordnung 1 ist auch im Schema zu FIG 3 in FIG 4 zusammen mit der Trennwand 11 sowie mit dem durch den Umgebungsdruck Pᵤ gekennzeichneten Hochdruckbereich 13 und dem Innendruck Pᵢ gekennzeichneten Niederdruckbereich 15 gezeigt. Die Rohrleitungsanordnung 7 der Rohrdurchführung 1 mündet darüber hinaus in einen Betriebsdruckbereich, der vom Innengehäuse 19 umschlossen ist, und durch eine innere Trennwand 23 des Innengehäuses 19 vom Niederdruckbereich 15 getrennt ist.

Die Rohrdurchführung 1 weist eine Kompensatoranordnung 5 auf, die den Niederdruckbereich 15 gegen den Hochdruckbereich 13 abdichtet. Im Übrigen übernimmt die Kompensatoranordnung 5 eine gleiche wie im Zusammenhang mit FIG 1 und FIG 2 erläuterte Funktion.

Vorliegend liegt der Zwischenraum zwischen der Kompensatoranordnung 5 und der Rohrleitungsanordnung 7 auf Niveau des Niederdruckbereichs 15, nämlich bei einem Druck von Pᵢ. Die Kompensatoranordnung umschließt im Hochdruckbereich 13 dicht die Rohrleitungsanordnung 7 und ist im Niederdruckbereich 15 zum Zwischenraum zwischen Außengehäuse 3 und Innengehäuse 19 hin offen.

Vorliegend weist die Rohrdurchführung gemäß dem neuen Konzept einen ersten Eintrittsanschluss 31 und einen zweiten Eintrittsanschluss 33 auf, die im Hochdruckbereich 13 angeordnet sind. Dabei liegt der erste Eintrittsanschluss 31 dem zweiten Eintrittsanschluss 33 gegenüber. Insbesondere weist die Rohrleitungsanordnung ein erstes Rohrstück 35 am ersten Eintrittsanschluss 31 auf und ein zweites Rohrstück 37 am zweiten Eintrittsanschluss 33 auf. Das erste Rohrstück 35 und das zweite Rohrstück 37 sind dabei entlang einer gemeinsamen Achse 41 gegenüber liegend angeordnet. Darüber hinaus ist bei der in FIG 3 gezeigten Niederdruckturbine 20 die Achse 41 parallel zur Trennwand 11 angeordnet. Konkret ist bei dieser Ausführungsform gemäß der Erfindung die Rohrleitungsanordnung 7 in Form eines T-Stücks mit zwei Schenkeln und einem Stamm gebildet, wobei das erste Rohrstück 35 und das zweite Rohrstück 37 jeweils einen Schenkel bilden und ein Durchführungsrohrstück 39 den Stamm bildet. Das Durchführungsrohrstück 39 ist also an das Innengehäuse 19 angeschlossen und mündet in den Betriebsdruckbereich, der durch die innere Trennwand 23 vom Niederdruckbereich 15 getrennt ist. Auf diese Weise wird ein Medium 43 über die Rohrleitungsanordnung 7 in das Innengehäuse eingeleitet.

Bei der in FIG 3 gezeigten Ausführung der Rohrdurchführung 1 als T-stückförmige Rohrleitungsanordnung 7 tritt eine Druckdifferenz ΔP jeweils an gegenüber liegend angeordneten Querschnittsflächen 17 der FIG 4 auf, die schematisch gezeigt sind. Die Querschnittsfläche 17 wird dabei im Wesentlichen jeweils durch eine Querschnittsfläche eines Eintrittsanschlusses 31, 33 der Kompensatoranordnung 5 gebildet. Auf diese Weise treten die aufgrund der Druckdifferenz ΔP = Pᵤ - Pᵢ betriebsbedingt auftretenden Kräfte lediglich als Spiegelkräfte Fₛ auf. Wie FIG 4 zeigt, heben sich diese weitestgehend gegeneinander, unabhängig vom Betriebsfall, auf und sind schematisch dargestellt. Dies hat zur Folge, dass bei der in FIG 3 dargestellten Niederdruckturbine 20 im Unterschied zu der in FIG 1 dargestellten Niederdruckturbine 100 eine im Betrieb auf das Durchführungsrohrstück 39 wirkende Kraft F praktisch erst gar nicht entsteht bzw. vernachlässigbar ist. Eine Krafteinleitung auf das Innengehäuse 19 durch das Durchtrittsrohrstück ist damit von vornherein ausgeschlossen. Das Innengehäuse 19 der Niederdruckturbine 20 kann deshalb im Unterschied zum Innengehäuse 119 der Niederdruckturbine 100 gemäß dem Stand der Technik weniger stark ausgeführt werden und das Radialspiel einer Beschaufelung 121 kann vergleichsweise reduziert werden. Im Ergebnis führt dies zu einer Steigerung einer Turbinenleistung und einer Reduzierung der Turbinenkosten, da konstruktiver und materieller Aufwand herabgesetzt sind.

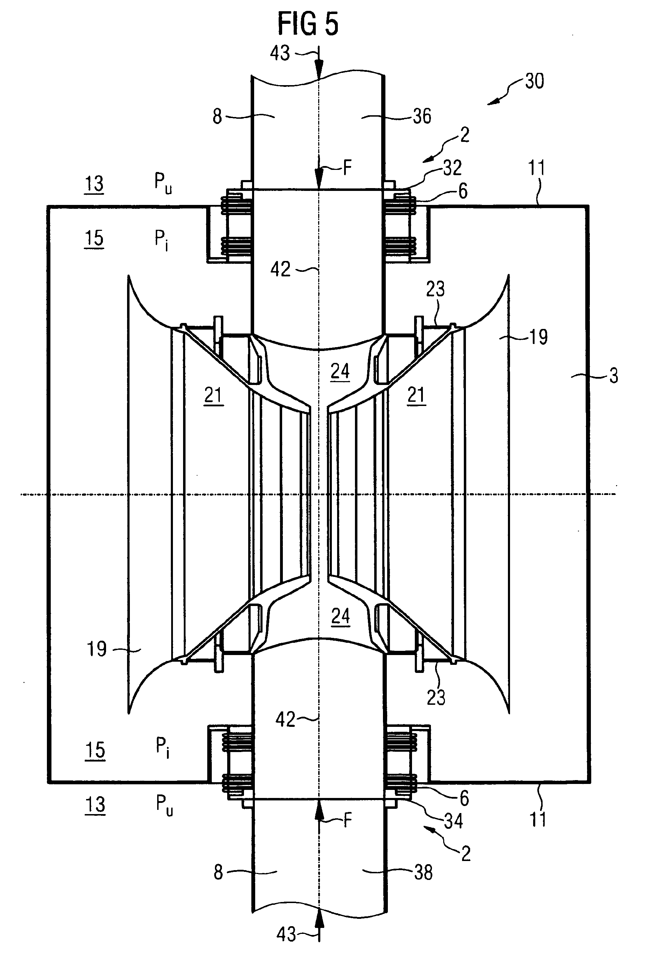

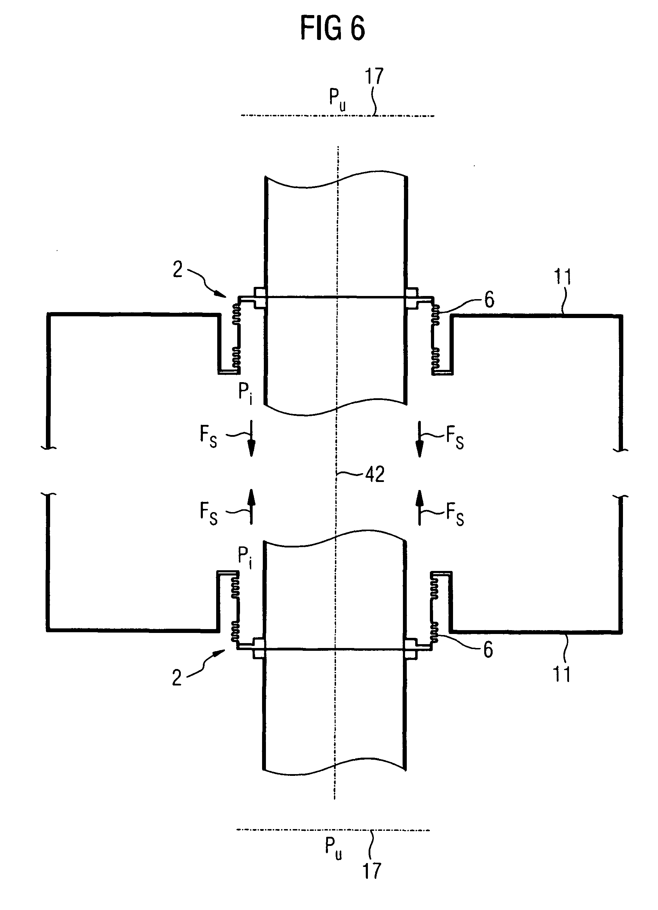

FIG 5 zeigt eine Niederdruckteilturbine 30 gemäß dem Stand der Technik mit einer Rohrdurchführung 2, die darüber hinaus im Schema zu FIG 5 in FIG 6 dargestellt ist. Die übrigen Merkmale der Niederdruckteilturbine 30 sind, soweit sie ähnlichen Aufbau und ähnliche Funktion wie die Merkmale der Niederdruckteilturbine 20 der FIG 3 und FIG 4 haben, mit gleichen Bezugszeichen versehen und sind nicht noch einmal erläutert.

Die Rohrdurchführung 2 weist im Unterschied zur Rohrdurchführung 101 der in FIG 1 dargestellten Niederdruckturbine 100 gemäß dem Stand der Technik bei der Niederdruckturbine 30 gemäß dem neuen Konzept einen ersten im Hochdruckbereich 13 angeordneten Eintrittsanschluss 32 einer Rohrleitungsanordnung 8 an die Kompensatoranordnung 6 auf, sowie einen zweiten im Hochdruckbereich 13 angeordneten Eintrittsanschluss 34 einer Rohrleitungsanordnung 8 an die Kompensatoranordnung 6 auf. Dabei liegen sich der erste Eintrittsanschluss 32 und der zweite Eintrittsanschluss 34 gegenüber. Insbesondere weist die Rohrleitungsanordnung 8 ein erstes Rohrstück 36 am ersten Eintrittsanschluss 32 auf und ein zweites Rohrstück 38 am zweiten Eintrittsanschluss 34 auf. Dabei sind das erste Rohrstück 36 und das zweite Rohrstück 38 entlang einer gemeinsamen Achse 42 gegenüber liegend angeordnet.

Im Unterschied zu der in FIG 3 und FIG 4 dargestellten Niederdruckteilturbine 20 gemäß der Erfindung ist bei der in FIG 5 dargestellten Niederdruckteilturbine 30 die Achse 42 quer zur Trennwand 11 angeordnet. Insbesondere ist die Rohrleitungsanordnung 8 in Form zweier Schenkel gebildet, wobei das erste einen Schenkel bildende Rohrstück 36 ein Durchführungsrohrstück ist und ein zweites einen Schenkel bildendes Rohrstück 38 ebenfalls ein Durchführungsrohrstück ist. Beide Rohrstücke 36, 38 münden nämlich in einen Betriebsdruckbereich 24 innerhalb des Innengehäuses 19, der durch die innere Trennwand 23 vom Niederdruckbereich 15 getrennt ist.

Wie bereits bei der Niederdruckteilturbine 20 in FIG 3 und FIG 4 ist bei der Niederdruckteilturbine 30 der FIG 5 und FIG 6 die äußere Trennwand 11 Teil des Außengehäuses 3 sowie die innere Trennwand 23 Teil des Innengehäuses 19.

Bei der in FIG 5 und FIG 6 gezeigten Niederdruckteilturbine 30 wird zwar, im Unterschied zu der in FIG 3 und FIG 4 gezeigten Niederdruckteilturbine 20 gemäß der Erfindung, eine Kraft F aufgrund der Druckdifferenz ΔP = Pᵤ - Pᵢ über das erste und zweite Rohrstück 36, 38 auf das Innengehäuse 19 geleitet - allerdings tritt diese Krafteinleitung nicht einseitig auf, sondern auf das Innengehäuse 19 wirken Spiegelkräfte Fg, die im Schema zu FIG 6 dargestellt sind. Das Innengehäuse 19 kann also vorteilhaft auf Kräfte in der Größenordnung einer Kraft F ausgelegt sein. Im Unterschied zu der in FIG 1 dargestellten Niederdruckturbine 100 gemäß dem Stand der Technik, ist die eingeleitete Kraft in Form einer Spiegelkraft Fₛ eingeleitet und wirkt damit nicht einseitig, so dass eine Verlagerung des Innengehäuses 19 ausgeschlossen ist. Dies kann zu einer signifikanten Verminderung des Radialspiels in den Dichtungen bzw. Deckbändern der Beschaufelung 21 genutzt werden, was wiederum zu einer signifikanten Steigerung der Turbinenleistung genutzt werden kann, da eine unnötige Spaltleckage vermieden ist.

Zum Betrieb einer Turbine wird ein Arbeitsmedium 43 durch eine einen Hochdruckbereich 13 von einem Niederdruckbereich 15 trennende Trennwand 11 mit einer Rohrleitungsanordnung 7, 8 hindurchgeführt. Die Trennwand 11 ist Teil des Außengehäuses 3. Der Niederdruckbereich 13 ist gegen den Hochdruckbereich 15 durch eine die Rohrleitungsanordnung 7, 8 mindestens im Hochdruckbereich 13 umschließende Kompensatoranordnung 5, 6 abgedichtet. Das Medium 43 wird zum Betrieb der Niederdruckteilturbine 20, 30 durch den im Betriebsdruckbereich 24 herrschenden Betriebsdruck innerhalb des Innengehäuses 19 durch die Rohrleitungsanordnung 7, 8 angesaugt. Das Medium 43 wird über einen ersten, im Hochdruckbereich 13 angeordneten Eintrittsanschluss 31, 32 und über einen zweiten im Hochdruckbereich 13 angeordneten Eintrittsanschluss 33, 34 in der Rohrleitungsanordnung 7, 8 im Niederdruckbereich 15 geführt. Vorzugsweise wird das Medium 43 dabei im Betriebsfall im Bereich des ersten 31, 32 und zweiten 33, 34 sich gegenüber liegenden Eintrittsanschlusses gegenläufig geführt, was durch die Pfeile auf der Achse 41, 42 angedeutet ist.

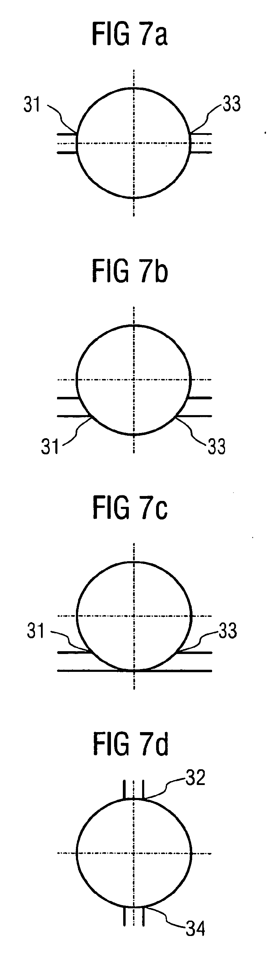

Die Einströmanschlüsse 31, 33 sowie 32, 34 können an unterschiedlichen Umfangspositionen liegen. Entscheidend ist, dass beide Anschlüsse einander gegenüberliegen. In FIG 7 ist schematisch dargestellt, wie in unterschiedlichen Modifikationen (a), (b), (c), (d) die Eintrittsanschlüsse 31, 33, 32, 34 relativ zu einem Rohrstück 35, 37, 36, 38 positioniert sein können.

Zusammenfassend wirkt üblicherweise bei einer Rohrdurchführung 1, 2 durch eine einen Hochdruckbereich 13 von einem Niederdruckbereich 15 trennenden Trennwand 11 aufgrund der Druckdifferenz ΔP zwischen den Bereichen 13, 15 eine nicht unerhebliche Kraft, welche nachteiligerweise auf nachfolgende Komponenten übertragen werden kann. Üblicherweise ist bei einer Rohrdurchführung eine Rohrleitungsanordnung 7, 8 und eine die Rohrleitungsanordnung 7, 8 mindestens im Hochdruckbereich 13 umschließende und den Niederdruckbereich 15 gegen den Hochdruckbereich 13 abdichtende Kompensatoranordnung 5, 6 vorgesehen. Zur Problembehebung sieht das neue Konzept eine Rohrdurchführungsanordnung gemäß Anspruch 1 vor.

## Patentansprüche

1. Rohrdurchführung (1) durch eine einen Hochdruckbereich (13) von einem Niederdruckbereich (15) trennende Trennwand (11), mit einer Rohrleitungsanordnung (7) und einer die Rohrleitungsanordnung (7) mindestens im Hochdruckbereich (13) umschließenden und den Niederdruckbereich (15) gegen den Hochdruckbereich (13) abdichtenden Kompensatoranordnung (5),
mit einem ersten und einem zweiten im Hochdruckbereich (13) angeordneten Eintrittsanschluss (31, 33) einer Rohrleitungsanordnung (7) an die Kompensatoranordnung (5), wobei sich der erste und der zweite Eintrittsanschluss (31, 33) gegenüberliegen,
wobei die Rohrleitungsanordnung (7) ein erstes Rohrstück (35) am ersten Eintrittsanschluss (31) und ein zweites Rohrstück (37) am zweiten Eintrittsanschluss (33) aufweist,
wobei das erste und zweite Rohrstück (35, 37) entlang einer gemeinsamen Achse (41) sich gegenüberliegend angeordnet sind (41) sich wobei die Achse (41) parallel zur Trennwand (11) verläuft, **dadurch gekennzeichnet, dass**
die Rohrleitungsanordnung (7) in Form eines T-Stücks mit zwei Schenkeln und einem Stamm gebildet ist, wobei das erste Rohrstück (35) und das zweite Rohrstück (37) jeweils einen Schenkel bilden und ein Durchführungsrohrstück (39) den Stamm bildet.

2. Rohrdurchführung (1) nach Anspruch 1,
**dadurch gekennzeichnet, dass**
die Rohrleitungsanordnung (7) mindestens im Hochdruckbereich (13) von der Kompensatoranordnung (5) dicht umschlossen ist.

3. Rohrdurchführung (1) nach Anspruch 1 oder 2,
**dadurch gekennzeichnet, dass**
ein Zwischenraum zwischen Kompensatoranordnung (5) und Rohrleitungsanordnung (7) auf Niederdruckniveau (Pᵢ) liegt.

4. Rohrdurchführung (1) nach einem der Ansprüche 1 bis 3,
**dadurch gekennzeichnet, dass**
die Trennwand (11) in Form einer äußeren Trennwand gebildet ist und die Rohrleitungsanordnung (7) in einen Betriebsdruckbereich (24) mündet, der durch eine innere Trennwand (23) vom Niederdruckbereich (15) getrennt ist.

5. 4, Rohrdurchführung (1) nach einem der Ansprüche 1 bis 4,
**dadurch gekennzeichnet, dass**
die Rohrleitungsanordnung (7) in Form einer Dampfzuführung für eine Turbine (20) gebildet ist.

6. Turbine (20) mit einer Rohrdurchführung (1) nach einem der Ansprüche 1 bis 5,
**gekennzeichnet durch**
ein Innengehäuse (19) und ein Außengehäuse (3), wobei die äußere Trennwand (11) einen Teil des Außengehäuses (3) bildet.

7. Turbine (20) nach Anspruch 6,
**dadurch gekennzeichnet, dass**
die innere Trennwand (23) einen Teil des Innengehäuses (19) bildet.

8. Turbine (20) nach Anspruch 6 oder 7 in Form einer Niederdruckturbine.

9. Verfahren zur Durchführung eines Mediums (43) durch eine einen Hochdruckbereich (13) von einem Niederdruckbereich (15) trennende Trennwand (11) mit einer Rohrleitungsanordnung (7), wobei der Niederdruckbereich (15) gegen den Hochdruckbereich (13) durch eine die Rohrleitungsanordnung (7) mindestens im Hochdruckbereich (13) umschließende Kompensatoranordnung (5) abgedichtet wird,
wobei das Medium (43) über einen ersten und einen zweiten im Hochdruckbereich (13) angeordneten Eintrittsanschluss (31, 33) einer Rohrleitungsanordnung (7) durch die Kompensatoranordnung (5) in den Niederdruckbereich (15) geführt wird,
wobei sich der erste und der zweite Eintrittsanschluss (31, 33) gegenüberliegen,
wobei die Rohrleitungsanordnung (7) ein erstes Rohrstück (35) am ersten Eintrittsanschluss (31) und ein zweites Rohrstück (37) am zweiten Eintrittsanschluss (33) aufweist,
wobei das erste und zweite Rohrstück (35, 37) entlang einer gemeinsamen Achse (41) sich gegenüberliegend angeordnet sind,
wobei die Achse (41) parallel zur Trennwand (11) verläuft, **dadurch gekennzeichnet, dass**
die Rohrleitungsanordnung (7) in Form eines T-Stücks mit zwei Schenkeln und einem Stamm gebildet wird,
wobei das erste Rohrstück (35) und das zweite Rohrstück (37) jeweils einen Schenkel bilden und ein Durchführungsrohrstück (39) den Stamm bildet.

## Claims

1. Pipe leadthrough (1) through a partition (11) separating a high-pressure region (13) and a low-pressure region (15), with a pipeline arrangement (7) and with a compensator arrangement (5) surrounding the pipeline arrangement (7) at least in the high-pressure region (13) and sealing off the low-pressure region (15) with respect to the high-pressure region (13), with a first and a second inlet connection (31, 33), arranged in the high-pressure region (13), of a pipeline arrangement (7) to the compensator arrangement (5), the first and the second inlet connection (31, 33) lying opposite one another, the pipeline arrangement (7) having a first pipe piece (35) at the first inlet connection (31) and a second pipe piece (37) at the second inlet connection (33), the first and the second pipe piece (35, 37) being arranged opposite one another along a common axis (41), the axis (41) running parallel to the partition (11), **characterized in that** the pipeline arrangement (7) is formed in the shape of a T-piece with two legs and with a stem, the first pipe piece (35) and the second pipe piece (37) in each case forming a leg, and a leadthrough pipe piece (39) forming the stem.

2. Pipe leadthrough (1) according to Claim 1, **characterized in that** the pipeline arrangement (7) is sealingly surrounded at least in the high-pressure region (13) by the compensator arrangement (5).

3. Pipe leadthrough (1) according to Claim 1 or 2, **characterized in that** an interspace between the compensator arrangement (5) and pipeline arrangement (7) lies at low-pressure level (Pᵢ).

4. Pipe leadthrough (1) according to one of Claims 1 to 3, **characterized in that** the partition (11) is formed in the shape of an outer partition, and the pipeline arrangement (7) issues into an operating-pressure region (24) which is separated from the low-pressure region (15) by an inner partition (23).

5. Pipe leadthrough (1) according to one of Claims 1 to 4, **characterized in that** the pipeline arrangement (7) is formed in the shape of a steam feed for a turbine (20).

6. Turbine (20) with a pipe leadthrough (1) according to one of Claims 1 to 5, **characterized by** an inner casing (19) and an outer casing (3), the outer partition (11) forming part of the outer casing (3).

7. Turbine (20) according to Claim 6, **characterized in that** the inner partition (23) forms part of the inner casing (19).

8. Turbine (20) according to Claim 6 or 7 in the shape of a low-pressure turbine.

9. Method for leading a medium (43) through a partition (11) separating a high-pressure region (13) from a low-pressure region (15), by means of a pipeline arrangement (7), the low-pressure region (15) being sealed off with respect to the high-pressure region (13) by means of a compensator arrangement (5) surrounding the pipeline arrangement (7) at least in the high-pressure region (13), the medium (43) being led through the compensator arrangement (5) into the low-pressure region (15) via a first and a second inlet connection (31, 33), arranged in the high-pressure region (13), of a pipeline arrangement (7), the first and the second inlet connection (31, 33) lying opposite one another, the pipeline arrangement (7) having a first pipe piece (35) at the first inlet connection (31) and a second pipe piece (37) at the second inlet connection (33), the first and the second pipe piece (35, 37) being arranged opposite one another along a common axis (41), the axis (41) running parallel to the partition (11), **characterized in that** the pipeline arrangement (7) is formed in the shape of a T-piece with two legs and with a stem, the first pipe piece (35) and the second pipe piece (37) in each case forming a leg, and a leadthrough pipe piece (39) forming the stem.

## Revendications

1. Passage ( 1 ) pour un tuyau dans une cloison (11) séparant une zone ( 13 ) sous haute pression d'une zone ( 15 ) sous basse pression, comprenant un agencement ( 7 ) de canalisation et un agencement ( 5 ) formant comparateur, qui entoure l'agencement ( 7 ) de canalisation, au moins dans la zone ( 13 ) sous haute pression, et qui rend la zone ( 15 ) sous basse pression étanche par rapport à la zone ( 13 ) sous haute pression,
comprenant un premier raccord d'entrée et un deuxième raccord ( 31, 33 ) d'entrée, disposés dans la zone ( 13 ) sous haute pression, d'un agencement ( 7 ) de canalisation à l'agencement ( 5 ) formant comparateur, le premier et le deuxième raccords ( 31, 33 ) d'entrée étant opposés,
dans lequel l'agencement ( 7 ) de canalisation comporte une première pièce ( 35 ) tubulaire sur le premier raccord ( 31 ) d'entrée et une deuxième pièce ( 37 ) tubulaire sur le deuxième raccord ( 33 ) d'entrée,
dans lequel la première et la deuxième pièces (35, 37) tubulaires sont disposées de manière opposée le long d'un axe ( 41 ) commun,
dans lequel l'axe ( 41 ) s'étend parallèlement à la cloison ( 11 ),
**caractérisé en ce que**
l'agencement ( 7 ) de canalisation est sous la forme d'une pièce en T ayant deux barrettes et une hampe,
dans lequel la première pièce ( 35 ) tubulaire et la deuxième pièce ( 37 ) tubulaire forment respectivement une barrette et une pièce ( 39 ) tubulaire de passage forme la hampe.

2. Passage ( 1 ) suivant la revendication 1,
**caractérisé en ce que**
l'agencement (7) de canalisation est enfermé de manière étanche, au moins dans la zone ( 13 ) sous haute pression, par l'agencement ( 5 ) formant compensateur.

3. Passage ( 1 ) suivant la revendication 1 ou 2,
**caractérisé en ce que**
un espace intermédiaire entre un agencement (5) formant comparateur et un agencement ( 7 ) de canalisation a un niveau ( Pᵢ ) de basse pression.

4. Passage ( 1 ) suivant l'une des revendications 1 à 3,
**caractérisé en ce que**
la cloison ( 11 ) est sous la forme d'une cloison extérieure et l'agencement ( 7 ) de canalisation débouche dans une zone ( 24 ) sous une pression de fonctionnement, qui est séparée de la zone ( 15 ) sous basse pression par une cloison ( 23 ) intérieure.

5. Passage ( 1 ) suivant l'une des revendications 1 à 4,
**caractérisé en ce que**
l'agencement ( 7 ) de canalisation est sous la forme d'une amenée de vapeur pour une turbine ( 20 ).

6. Turbine ( 20 ) comprenant un passage ( 1 ) pour un tuyau suivant l'une des revendications 1 à 5,
**caractérisée par**
une enveloppe ( 19 ) intérieure et une enveloppe ( 3 ) extérieure, la cloison ( 11 ) extérieure formant une partie de l'enveloppe ( 13 ) extérieure.

7. Turbine ( 20 ) suivant la revendication 6,
**caractérisée en ce que**
la cloison ( 23 ) intérieure forme une partie de l'enveloppe ( 19 ) intérieure.

8. Turbine ( 20 ) suivant la revendication 6 ou 7 sous la forme d'une turbine basse pression.

9. Procédé pour faire passer un milieu ( 43 ) à travers une cloison ( 11 ) séparant une zone ( 13 ) sous haute pression d'une zone ( 15 ) sous basse pression, comprenant un agencement ( 7 ) de canalisation, la zone ( 15 ) sous basse pression étant rendue étanche par rapport à la zone ( 13 ) sous haute pression par un agencement ( 5 ) formant comparateur entourant l'agencement ( 7 ) de canalisation, au moins dans la zone ( 13 ) sous haute pression,
dans lequel on fait passer le milieu ( 43 ) par un premier et par un deuxième raccords ( 31, 33 ) d'entrée, disposés dans la zone ( 13 ) sous haute pression, d'un agencement ( 7 ) de canalisation dans l'agencement ( 5 ) formant comparateur dans la zone ( 15 ) sous basse pression,
dans lequel le premier et le deuxième raccords ( 31, 33 ) d'entrée sont opposés,
dans lequel l'agencement ( 7 ) de canalisation comporte une première pièce ( 35 ) tubulaire sur le premier raccord ( 31 ) d'entrée et une deuxième pièce (37) tubulaire sur le deuxième raccord ( 33 ) d'entrée,
dans lequel la première et la deuxième pièces (35, 37) tubulaires sont disposées de manière opposée le long d'un axe ( 41 ) commun,
dans lequel l'axe ( 41 ) s'étend parallèlement à la cloison ( 11 ),
**caractérisé en ce que**
l'agencement ( 7 ) de canalisation est sous la forme d'une pièce en T ayant deux barrettes et une hampe,
dans lequel la première pièce ( 35 ) tubulaire et la deuxième pièce ( 37 ) tubulaire forment respectivement une barrette et une pièce ( 39 ) tubulaire de passage forme la hampe.
